(19)

Europäisches
Patentamt
European
Patent Office
Office européen
des brevets

(11) **EP 1 835 498 A2**

(12) **EUROPEAN PATENT APPLICATION**

(43) Date of publication:
**19.09.2007 Bulletin 2007/38**

(51) Int Cl.:
***G11B 7/24*** *(2006.01)*

(21) Application number: **07102041.6**

(22) Date of filing: **09.02.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **17.03.2006 JP 2006075691**

(71) Applicant: **KABUSHIKI KAISHA TOSHIBA
Tokyo 105-8001 (JP)**

(72) Inventors:
• **Oomachi, Noritake
Toshiba Corporation
Minato-ku
Tokyo 105-8001 (JP)**
• **Ashida, Sumio
Toshiba Corporation
Minato-ku
Tokyo 105-8001 (JP)**

• **Yusu, Keiichiro
Toshiba Corporation
Minato-ku
Tokyo 105-8001 (JP)**
• **Nakamura, Naomasa
Toshiba Corporation
Minato-ku
Tokyo 105-8001 (JP)**
• **Nakai, Tsukasa
Toshiba Corporation
Minato-ku
Tokyo 105-8001 (JP)**

(74) Representative: **Henkel, Feiler & Hänzel
Patentanwälte
Maximiliansplatz 21
80333 München (DE)**

(54) **Optical disk and optical disk device**

(57) According to one embodiment, there is provided an optical disk including a substrate layer (11) having a refractive index of 1.50 to 1.70 and a thickness X ($\mu$m) equal to or greater than f (n) - 13 $\mu$m, a first information layer (12) formed on the substrate layer, an adhesive layer (13) formed on the first information layer and having a thickness Y ($\mu$m) equal to or greater than 20 $\mu$m, and a second information layer (14) formed on the adhesive layer, wherein X + Y ≤ f (n) + 30 $\mu$m and f (n) < X + Y/2 are satisfied and f (n) is given by the formula f (n) = ($A_1 \times n^3$) ($n^2 + A_2$) / ($n^2$ - 1) ($n^2 + A_3$) $\times$ 1000 ($\mu$m), where "n" is a refractive index of the substrate layer, $A_1$ is 0.26200, $A_2$ is -0.32400, and A3 is 0.00595.

FIG. 1

**EP 1 835 498 A2**

## Description

One embodiment of the present invention relates to a multi-layered optical disk capable of recording and reproducing information from a light incidence face side to a plurality of recording films, and an optical disk device carrying out the recording and reproduction.

An optical disk that serves as an information recording medium is widely utilized as conforming to a DVD standard, the optical disk being capable of recording video image and music contents. This kind of optical disk includes: a reproduction only type, a write once type capable of recording information only one time; and a rewrite type or the like represented by an external memory or a recording video and the like of a computer. The optical disk conforming to a DVD standard has a structure in which two substrates each having a thickness of 0.6 mm (nominal) are bonded with each other, NA of an objective lens is 0.6, and a wavelength of a laser beam for use in recording/reproduction is 650 nm. In recent years, there has been expectation for increasing storage capacity. As a technique of increasing storage capacity, there are exemplified: shortening a wavelength of a light source; increasing the number of apertures of an objective lens; improvement of a modulation/demodulation technique; improvement of formatting efficiency; multi-layering and the like. In an HD DVD standard, recording density is remarkably improved using a blue laser having a wavelength on the order of 405 nm to increase a capacity; the NA of the objective lens is set to 0.65, thereby enabling affinity with a current DVD. However, for the purpose of a further increase of a capacity, the multi-layering of an information recording medium has been promoted.

In such a multi-layered information recording medium, with respect to specifically how large each layer should be, patent document 1 describes a relationship indicated by a predetermined formula among an error (tolerance) in thickness of a light transmission layer and a thickness and wavelength between recording layers; the number of apertures; and a refractive index.

However, in a conventional technique of patent document 1 (Jpn. Pat. Appln. KOKAI Publication No. 2004-71046), there has been a problem that, in order to carry out sufficient information separation in a plurality of recording apparatuses without producing a spherical aberration, no specific example is shown as to specifically how large a transparent substrate and an adhesive layer should be in values, respectively.

It is an object of the present invention to provide an optical disk having a plurality of recording layers capable of avoiding a spherical aberration and reliably carrying out information separation among a plurality of recording layers.

The present invention has been made in consideration of the above circumstances, and there is provided an optical disk comprising: a substrate layer (11) having a refractive index of 1.50 to 1.70 and a thickness X ($\mu$m) equal to or greater than f (n) - 13 $\mu$m; a first information layer (12) formed on the substrate layer; an adhesive layer (13) formed on the first information layer and having a thickness Y ($\mu$m) equal to or greater than 20 $\mu$m; and a second information layer (14) formed on the adhesive layer, wherein $X + Y \leq f(n) + 30$ $\mu$m and $f(n) < X + Y/2$ are satisfied and f (n) is given by the formula: $f(n) = (A_1 \times n^3)(n^2 + A_2)/(n^2 - 1)(n^2 + A_3) \times 1000$ ($\mu$m), where "n" is a refractive index of the substrate layer; $A_1$ is 0.26200; $A_2$ is -0.32400; and A3 is 0.00595.

There is provided an optical disk capable of obtaining a reproduction signal having a good resolution by avoiding a spherical aberration and reliably carrying out information separation among a plurality of recording layers.

The invention can be more fully understood from the following detailed description when taken in conjunction with the accompanying drawings, in which:

FIG. 1 is a sectional view showing an example of a configuration of a two-layered disk according to an embodiment of the present invention;
FIG. 2 is a graph depicting an example of an influence on reproduction characteristics of a first information layer, the influence being caused by a spherical aberration of a two-layered optical disk according to an embodiment of the present invention;
FIG. 3 is a graph depicting an example of a reproduction waveform in a disk having different substrate thickness according to an embodiment of the present invention;
FIG. 4 is a graph depicting an example of an influence on reproduction characteristics of a first information layer, of an inter-layer crosstalk of a two-layered optical disk according to an embodiment of the present invention;
FIG. 5 is a graph depicting an example of an influence that X + Y/2, (X = 587 $\mu$m) have on recording/reproducing characteristics of a first information layer and a second information layer of a two-layered optical disk according to an embodiment of the present invention;
FIG. 6 is a graph depicting an example of an influence that X + Y/2, (Y = 20 $\mu$m) have on recording/reproducing characteristics of a first information layer and a second information layer of a two-layered optical disk according to an embodiment of the present invention;
FIG. 7 is a graph depicting an example of a radial tilt margin in X + Y/2: 600 $\mu$m, 601 $\mu$m, (X = 587 $\mu$m) of a two-layered optical disk according to an embodiment of the present invention;
FIG. 8 is a sectional view showing an example of another configuration of a two-layered optical disk according to an embodiment of the present invention;

FIG. 9 is a sectional view showing an example of another configuration of a two-layered optical disk according to an embodiment of the present invention;

FIG. 10 is a sectional view showing an example of another configuration of a two-layered optical disk according to an embodiment of the present invention;

FIG. 11 is a sectional view showing an example of another configuration of a two-layered optical disk according to an embodiment of the present invention;

FIG. 12 is a block diagram depicting an example of an optical disk device handling a two-layered optical disk according to an embodiment of the present invention;

FIG. 13 is an illustrative view showing a general parameter setting example of a two-layered optical disk according to an embodiment of the present invention;

FIG. 14 is an illustrative view showing a relationship between a wobble shape and an address bit in an address bit region of a two-layered optical disk according to an embodiment of the present invention;

FIG. 15 is an illustrative layout view showing an inside of a wobble data unit relating to a primary layout location and a secondary layout location of a two-layered optical disk according to an embodiment of the present invention;

FIG. 16 is an illustrative view showing an embodiment relating to a data structure in wobble address information of a two-layered optical disk according to an embodiment of the present invention;

FIG. 17 is an illustrative view showing a layout location of a modulation region on a two-layered optical disk according to an embodiment of the present invention;

FIG. 18 is an illustrative view showing a method for measuring Wppmax and Wppmin of a two-layered optical disk according to an embodiment of the present invention;

FIG. 19 is a specific illustrative view showing a wobble signal and a track shift signal of a two-layered optical disk according to an embodiment of the present invention;

FIG. 20 is an illustrative view showing a method for measuring a (I1 - I2) pp signal of a two-layered optical disk according to an embodiment of the present invention;

FIG. 21 is a block diagram depicting a circuit for measuring NBSNR relevant to a square waveform of a wobble signal of a two-layered optical disk according to an embodiment of the present invention;

FIG. 22 is an illustrative view showing a method for measuring NBSNR of a two-layered optical disk according to an embodiment of the present invention;

FIG. 23 is a graph depicting an example of spectrum analyzer detection signal characteristics of a wobble signal using phase modulation of a two-layered optical disk according to an embodiment of the present invention; and

FIG. 24 is a graph depicting an example of a spectrum analyzer waveform of a phase-modulated wobble signal of a two-layered optical disk according to an embodiment of the present invention.

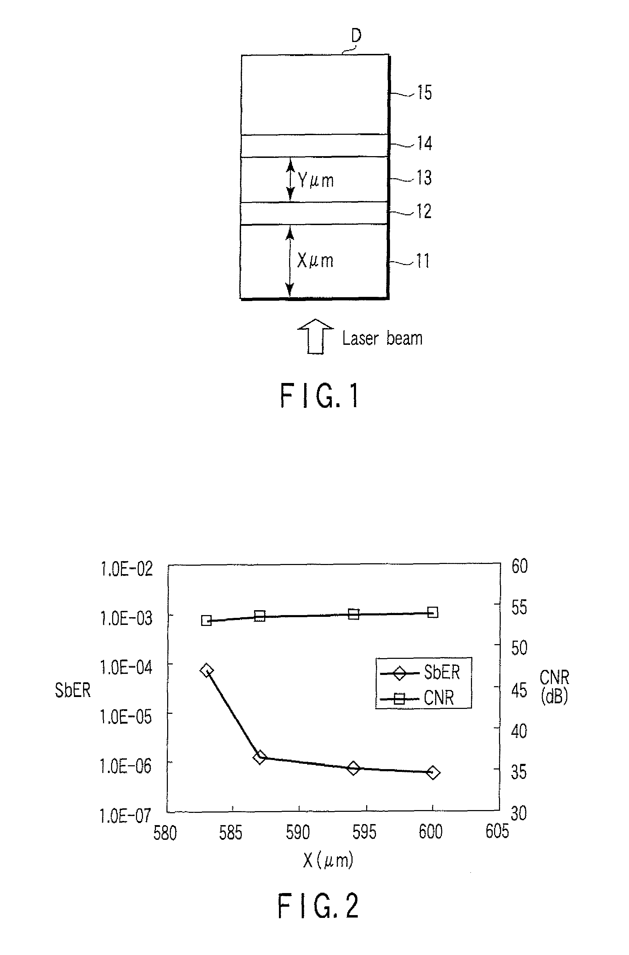

Now, embodiments of the present invention will be described in detail with reference to the accompanying drawings. FIG. 1 is a sectional view showing an example of a configuration of a two-layered optical disk according to an embodiment of the present invention.

<First embodiment of optical disk according to the present invention: FIG. 1>

(Configuration)

First, a configuration of an optical disk D according to an embodiment of the present invention will be described with reference to the accompanying drawings. As shown in FIG. 1, in an optical disk according to an embodiment of the present invention, there are sequentially provided, from the incident laser beam side: a transparent substrate 11; a first information layer 12; an adhesive layer (intermediate layer) 13; a second information layer 14; and a substrate 15. The transparent substrate 11 transmits light in a wavelength of a laser beam for use in recording/reproducing information and a material (such as polycarbonate) having a refractive index of 1.50 to 1.70 is used. In addition, for the adhesive layer, an ultraviolet-ray curing resin, tape and the like, which are optically transparent in wavelength of a laser beam for use in recording/reproducing information, are used. In FIG. 1, a thickness of the transparent substrate 11 is defined as X $\mu$m, and a thickness of the adhesive layer (intermediate layer) 13 is defined as Y $\mu$m. In this optical disk, the laser beams focused on an objective lens are irradiated from the side of the transparent substrate 11, whereby recording/reproduction of the first information layer 12 and the second information layer 14 is carried out. At least one of the first information layer 12 and the second information layer 14 includes a phase change recording material such as an Sb-Te based alloy film or an organic pigment material having light absorption in the range of laser beams to be used. These materials will be described later.

(Problems and countermeasures)

In a multi-layered disk made of two or more layers, there is a problem that a reproduction signal quality is degraded due to a spherical aberration or due to leakage of a signal from a non-reproduction layer. In order to restrict the occurrence of the signal leakage (inter-layer crosstalk) from the non-reproduction layer while reproducing an information recording layer and the degradation of the reproduction signal quality, it is necessary to provide a sufficient thickness of an intermediate layer, and it is desirable that a thickness Y of an adhesive layer formed between a first information layer and a second information layer be 20 $\mu$m or more. However, if the sufficient thickness of the intermediate layer is provided, a distance up to the information recording layer greatly deviates from a distance at which a spherical aberration becomes minimal; and an influence caused by the spherical aberration becomes great. Thus, it is desirable that the thickness Y of the adhesive layer be 35 $\mu$m or less.

With respect to an influence of the spherical aberration, in an HD DVD, a recording/reproducing optical system is designed to be optimal to record and reproduce an information recording layer over a substrate having a thickness of 0.6 mm. Thus, if the distance up to the information recording layer deviates from this optimal value, a beam spot is distorted and enlarged due to the influence of the spherical aberration, and then, a recording/reproduction signal is degraded. An allowable deviation from the optimal distance based on a result of simulation using a one-layered optical disk with a film free of light transmission property is obtained to be $\pm 30$ $\mu$m. In addition, when an access is provided to an information recording layer allocated to the depth with respect to a laser beam incident face, it is necessary for the laser beam to transmit a frontal information recording layer. However, in order to prevent light from being attenuated more than necessary, it is necessary to ensure a sufficient transmittance. Therefore, it is necessary to decrease the thickness of a recording film or a reflection film in the frontal information recording layer, and thus a reproduction signal quality is degraded.

Accordingly, it is desirable that the thickness X of a substrate layer be f (n) - 13 $\mu$m or more and that the thickness of an adhesive layer formed between a first information layer and a second information layer be $X + Y \leq f$ (n) + 30 $\mu$m and f (n) < X + Y/2 with respect to Y. In this manner, reproduction signal quality degradation due to a spherical aberration and signal leakage from a non-reproduction layer is reduced, making it possible to improve a recording/ reproduction signal in the two information layers.

Here, the following formula is established:
f (n) = $(A_1 \times n^3)$ $(n^2 + A_2)/(n^2 - 1)$ $(n^2 + A_3) \times 1000$ ($\mu$m), where "n" is a refractive index of the substrate layer; $A_1$ is 0.26200; $A_2$ is -0.32400; and A3 is 0.00595.

- Reflection index

Further, it is desirable that a reflection index from the first information layer or the second information layer be 3% to 10% with respect to a wavelength of a laser beam for carrying out recording/reproduction. If a reflection light quantity is small, an SN ratio becomes short on the side of a recording/reproducing apparatus, thus requiring a reflection index equal to or greater than 3%. However, at a high reflection index, a light quantity absorbed by a recording film decreases correspondingly, and recording sensitivity is lowered. In order to enable recording at an equal light quantity with respect to the two information layers, it is necessary for a reflection index to be 10% or less in an optical disk in which transmittance of the first information layer is 50% to 55%. In addition, if a reflection index difference between a reproduction layer and a non-reproduction layer is increased, the signal leakage from a layer in which a reflection index is high to a layer in which a reflection index is low becomes great. Thus, it is desirable that a reflection index difference between the two information layers be $\pm 20$% or less (in addition, it is preferable that the reflection index from the second information layer with respect to the reflection index from the first information layer be between 0.8 time to 1.2 times as an example). In addition, in the two-layered optical disk, tracking becomes unstable because the reflection index is lower as compared with a one-layered optical disk. In the case where a guide groove depth is shallow or deep, a push-pull signal becomes small. Thus, a guide groove depth of 25 nm to 80 nm (or 25 nm to 100 nm) is required in both of the first information layer and the second information layer to enable stable tracking. The guide groove width is required to be 0.4 $\mu$m or less for the purpose of high density recording.

- Information layer

At least one of the first information layer 12 and the second information layer 14 can be reversibly recorded/ erased using light, and is equipped with a substrate, a recording film capable of reversibly changing an atomic sequence, a protective film, and a reflection film.

As the recording layer capable of reversibly changing the atomic sequence, it is preferable to use a phase change recording film such as a Ge-Sb-Te based alloy; a Ge-Sb-Bi-Te based alloy; a Ge-Bi-Te based alloy; a Ge-Sb-In-Te based alloy; a Ge-Bi-In-Te based alloy; a Ge-Sb-Bi-In-Te based alloy; a Ge-Sn-Sb-Te based alloy; an Ag-In-Sb-Te based alloy; an In-Ge-Sb-Te based alloy; or an Ag-In-Ge-Sb-Te based alloy. In the case where these materials are used, it is preferable to provide a film having a crystallization promoting function on one face or both faces of the phase change recording film. In addition, a dielectric material such as $ZnS$-$SiO_2$ and a reflection layer material such as an Ag alloy or an Al alloy are used together in consideration of an environment resistance property or repetition recording property.

In addition, at least one of the first information layer 12 and the second information layer 14 may only carry out reversible recording using light. In this case, it is desirable for the information layer to contain an organic pigment material having light absorption in the range of laser beams to be used. As organic pigment materials, there are exemplified a cyanine pigment, a phthalocyanine pigment or the like (a description of a two-layered R pigment material is to be inserted). These materials are used together with a reflection layer material such as an Ag alloy, an Al alloy, or an Au alloy.

The substrate thickness and adhesive layer thickness can be measured by means of mechanical characteristic evaluation devices for optical disks. These evaluation devices can carry out measurement from a difference in light travel paths by utilizing a plurality of different wavelengths or by using a plurality of incidence angles at a single wavelength. In addition, the substrate thickness X ($\mu$m) and the adhesive layer thickness Y ($\mu$m) are optical disk intra-planar average values.

With respect to a recording/reproducing apparatus for carrying out recording/reproduction with respect to a two-layered optical disk according to the present invention, in addition to a current recording/reproducing apparatus, there is a need for a mechanism of identifying how many layers an inserted optical disk is made of; a mechanism of carrying out focusing on each layer; and a mechanism of carrying out recording/reproduction with respect to each of the focused information recording layers. In addition, a mechanism for spherical aberration correction may be required for an optical system depending on a situation.

In a two-layered disk that enables recording by using a disk structure and a disk manufacturing method, a material, and a recording/reproducing apparatus as described above, a good reproduction signal quality can be obtained from two information layers, making it possible to improve recording capacity.

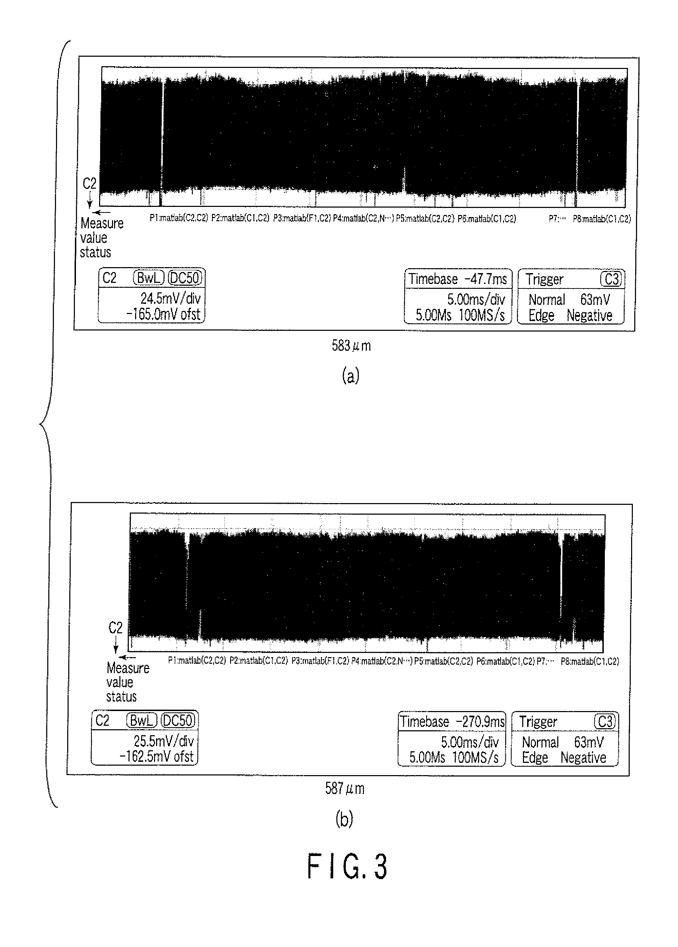

(First test data: FIGS. 2 and 3)

First test data is intended to verify a proper value of the substrate thickness X while the adhesive layer thickness Y is fixed. That is, in a two-layered optical disk, a first information layer is required to form a film having light transmittance equal to or greater than 50% in recording/reproduction wavelength. Thus, using the film that meets this condition, there was verified an influence on a reproduction signal quality, the influence being caused by a spherical aberration. In this test, because a substrate with refractive index "n" of 1.60 is used as a substrate layer, f (n) = 600 $\mu$m is established. In addition, an optical disk having only a first information layer was used in order to eliminate an influence caused by leakage of a signal from a non-reproduction layer.

With respect to the above two-layered optical disk, recording was carried out using an optical head having a wavelength of 405 nm and an NA of 0.65. The disk was rotated at a linear velocity of 6.6 m/s; a clock frequency was set to 64.8 MHz; and signals from 2T to 11T were measured by randomly recording them.

FIG. 2 shows an influence on reproduction characteristics after multi-track recording of a thickness X of the transparent substrate 11 with respect to an optical disk having only a first information layer with light transmittance equal to or greater than 50% in recording/reproduction wavelength. As indicators for the reproduction characteristics, there were used an SbER (Simulated bit Error Rate, Reference: Y, Nagai: Jpn. J. Appl. Phys. 42 (2003) 971.) and a CNR (carrier to noise ratio) of the sparsest mark. In the case where the CNR has been defined as an indicator, a spherical aberration does not have a great influence by the substrate thickness. However, in the case where the SbER has been defined as an indicator, a substrate thickness smaller than 587 $\mu$m is greatly influenced by a spherical aberration, thus making it possible to verify the fact that the substrate thickness X equal to or greater than 587 $\mu$m is required.

FIG. 3 shows a one-round reproduction waveform on a track after recorded, when the substrate thickness X is 583 $\mu$m or 587 $\mu$m. No influence of a substrate thickness change appears with the reproduction waveform at 587 $\mu$m, whereas an influence of a substrate thickness change appears with the reproduction waveform at 583 $\mu$m. Because the SbER is influenced by a recording waveform change, in the case where the thickness is smaller than 583 $\mu$m, considerable lowering of the reproduction characteristics is observed.

Therefore, the above influence can be avoided as long as the substrate thickness X 587 $\mu$m or more, and the reliability of a system described in the embodiments was successfully verified.

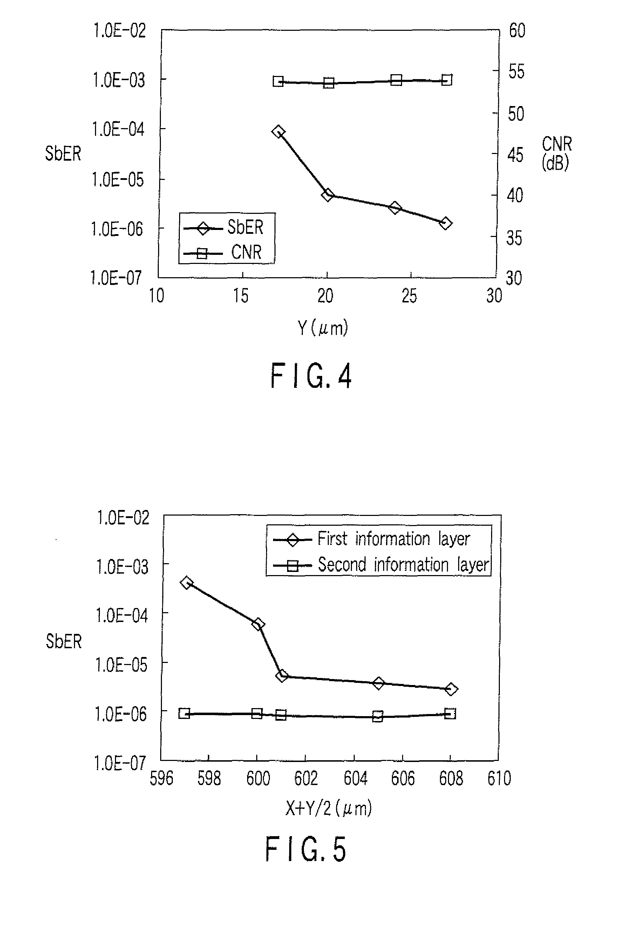

(Second test data: FIG. 4)

Second test data is intended to verify that, in order to avoid an influence caused by a spherical aberration, a thickness Y of an adhesive layer is required to 20 $\mu$m or more by checking the influence caused by signal leakage from a non-reproduction layer.

Here, FIG. 4 shows an influence of the thickness Y of the adhesive layer on recording/reproducing characteristics of a first information layer with respect to a two-layered optical disk on which a film having light transmittance equal to or greater than 50% is applied to a first information layer and a film free of light transmittance is applied to a second information layer, in order to check an influence caused by leakage of a signal from a non-reproduction layer. However, a thickness X of the transparent substrate 11 was defined as 600 $\mu$m in order to completely eliminate the influence caused by a spherical aberration in the first information layer. A CNR of the sparsest mark is substantially constant, whereas an SbER is extremely degraded in the case where the thickness X is smaller than 20 $\mu$m. Although the SbER is strongly influenced by a signal quality of a short mark of 2T and 3T, the influence of the reproduction signal quality degradation due to the leakage from the non-reproduction layer is greater in short mark than in long mark, and thus, the lowering of the reproduction signal quality occurred at the SbER.

Namely, from FIG. 4, it is found that the thickness Y of the adhesive layer is required to be 20 $\mu$m or more in order to completely eliminate the influence caused by a spherical aberration.

- Comparative Example 1

In the third embodiment, assuming a case in which the first information layer is influenced by an spherical aberration, an influence of the thickness Y of the adhesive layer on the recording/reproduction characteristics of the first information layer was measured at the CNR and SbER under the same condition as that for the above test data, by defining the thickness X of the transparent substrate 11 as 583 $\mu$m. The CNR was obtained to be equal to or greater than 53 dB, regardless of the thickness Y of the adhesive layer in the same manner as the case in which there is no influence of the spherical aberration. The SbER showed no influence of the thickness Y of the adhesive layer unlike the case in which there is no influence of the spherical aberration, and was on the order of 1E-4 in thickness Y of any adhesive layer.

From these results of Comparative Example 1 as well, it is verified that the thickness X of the transparent substrate 11 is required to be 587 $\mu$m.

(Third test data: FIG. 5)

Third test data is intended to verify that 600 $\mu$m < X + Y/2 is satisfied. An influence of the thickness X of the transparent substrate and the thickness Y of the adhesive layer is verified as to a case in which an influence is caused by a spherical aberration and a signal leakage from a non-reproduction layer obtained as the same condition as that for an actual two-layered optical disk.

That is, FIG. 5 shows a relationship between a distance X + Y/2 up to an intermediate location of the first information layer and the second information layer and reproduction characteristics after multi-track recording, with respect to an optical disk in which a film having light transmittance equal to or greater than 50% in recording/reproduction wavelength is attached to the first information layer, and a film free of light transmittance is attached to the second information layer. At this time, a transparent substrate of X = 587 $\mu$m was used.

Referring to FIG. 5, good recording/reproduction characteristics are obtained in the first information layer and the second information layer in the range of 600 $\mu$m < X + Y/2. Therefore, it is possible to verify the fact that the influence of signal leakage can be avoided in the range of f (n) < X + Y/2.

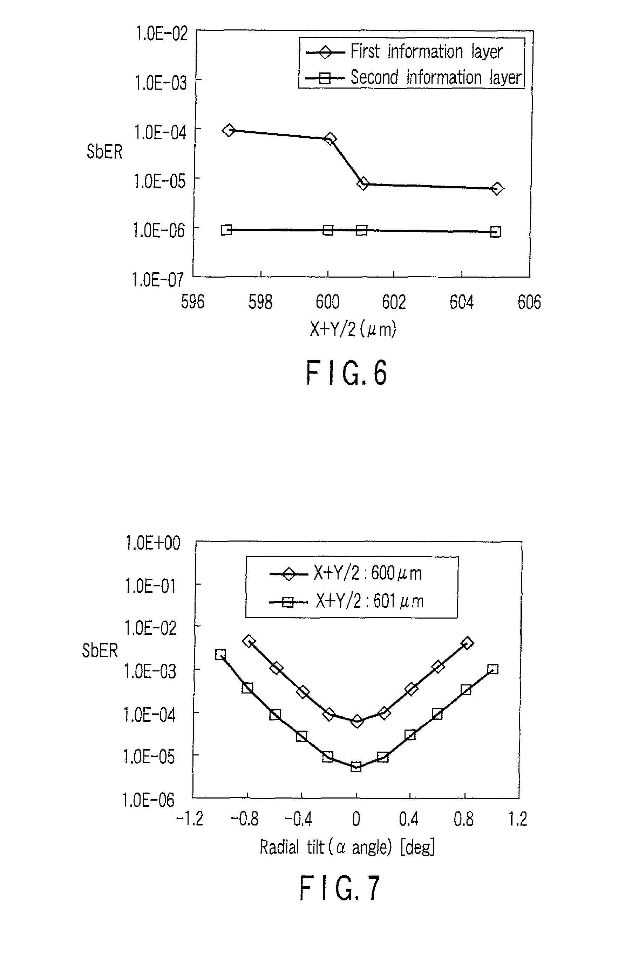

(Fourth test data: FIG. 6)

The fourth test data is intended to specify a relationship between X + Y/2 when Y = 20 $\mu$m and the reproduction characteristics after multi-track recording. That is, FIG. 6 shows a relationship between X + Y/2 when Y = 20 $\mu$m and the reproduction characteristics after multi-track recording.

In this manner, it is found that good recording/reproduction characteristics are obtained in the first information layer and the second information layer in the range of 600 $\mu$m < X + Y/2. As described above, in a recording type two-layered optical disk, by optimizing the thickness of the transparent substrate 11 and the thickness of the adhesive layer, the lowering of a reproduction signal quality due to a spherical aberration or due to signal leakage from a non-reproduction layer can be reduced to the minimum in the first information layer having light transmittance, enabling high density recording.

As a result, when a value of X + Y/2 is greater than 600, good reproduction characteristics can be obtained, making it possible to confirm that signal degradation can be avoided in f (n) < X + Y/2.

(Fifth test data: FIG. 7)

Fifth test data specifies a reproduction characteristic radial tilt margin of the first information layer with respect to a two-layered optical disk when X = 587 $\mu$m and X + Y/2 = 601 $\mu$m. That is, FIG. 7 shows a reproduction characteristic radial tilt margin of the first information layer with respect to a two-layered optical disk when X = 587 $\mu$m and X + Y/2 = 601 $\mu$m. SbER of 1.5E-4 or less which is a system side requirement is obtained in the range of 1.4 degrees, making it possible to obtain a wide tilt margin even under the high density recording. Therefore, it is verified that, when the value of X + Y/2 is greater than 600, i.e., when f (n) < X + Y/2 is satisfied, good reproduction characteristics can be obtained.

(Comparative Example 2)

In the sixth embodiment described above, FIG. 7 shows a reproduction characteristic radial tilt margin of the first information layer with respect to a two-layered optical disk when X = 587 $\mu$m and X + Y/2 = 600 $\mu$m. A tilt margin as wide as 0.6 degrees when the SbER is 1.5E-4 or less cannot be obtained as being a system side requirement. Therefore, it is verified that, when a value of X + Y/2 is not greater than 600, i.e., when f (n) < X + Y/2 is not established, good reproduction characteristics cannot be obtained.

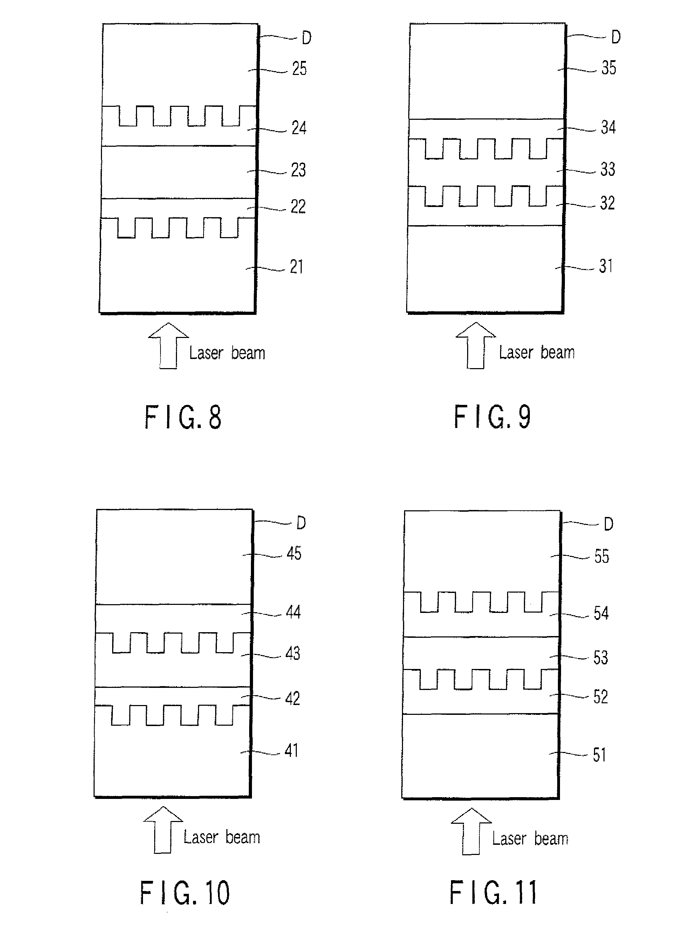

<Second embodiment: FIG. 8>

A second embodiment specifies that a guide groove of a first information layer 22 is provided on a transparent substrate 21 and that a guide groove of a second information layer 24 is provided on a substrate 25. Here, a guide groove is not provided in an adhesive layer 23.
That is, in FIG. 1, guide grooves provided in the first information layer 12 and the second information layer 14 are formed on the transparent substrate 21 and the substrate 25, respectively, as shown in FIG. 8. In this mode, the first to fifth test data described above and the recording/reproducing characteristics of Comparative Examples 1 and 2 are obtained.
In addition, the guide grooves formed in these first and second information layers are capable of carrying out recording into only a guide groove that is closer to the laser beam incidence side. In addition, the guide grooves formed in these first and second information layers are capable of carrying out recording into only a guide groove that is distant from the laser beam incidence side. Similarly, it is preferable to carry out recording into both of the guide grooves formed in the first and second information layers.

<Third embodiment: FIG. 9>

A third embodiment specifies that a guide groove of a first information layer 32 is provided on an adhesive layer 33 and that a guide groove of a second information layer 34 is also provided on the adhesive layer 33. Here, a guide groove is not provided in a transparent substrate 31 and a substrate 35.
That is, the guide grooves provided in the first information layer 12 and the second information layer 14 in FIG. 1 are formed in the adhesive layer 33, as shown in FIG. 9. Occasionally, the adhesive layer 33 may be formed of a multiple layers that consist of a plurality of materials. In this mode as well, the first to fifth test data described above and the recording/reproducing characteristics of Comparative Examples 1 and 2 are obtained.
In addition, the guide grooves formed in these first and second information layers are capable of carrying out recording into only a guide groove that is closer to the laser beam incidence side. In addition, the guide grooves formed in these first and second information layers are capable of carrying out recording into only a guide groove that is distant from the laser beam incidence side. Similarly, it is preferable to carry out recording into both of the guide grooves formed in the first and second information layers.

<Fourth embodiment: FIG. 10>

A fourth embodiment specifies that a guide groove of a first information layer 42 is provided on a transparent substrate 41 and that a guide groove of a second information layer 44 is provided on an adhesive layer 43. Here, a guide groove is not provided in a substrate 45.
That is, the guide groove provided in the first information layer 12 in FIG. 1 is formed on the transparent substrate 41, and the guide groove provided in the second information layer 14 is formed in the adhesive layer 43, as shown in FIG. 10. Occasionally, the adhesive layer 43 may be formed of a multiple layers that consist of a plurality of materials. In this mode as well, the first to fifth test data described above and the recording/reproducing characteristics of Comparative Examples 1 and 2 are obtained.
In addition, the guide grooves formed in these first and second information layers are capable of carrying out recording into only a guide groove that is closer to the laser beam incidence side. In addition, the guide grooves formed in these first and second information layers are capable of carrying out recording into only a guide groove that is distant from the laser beam incidence side. Similarly, it is preferable to carry out recording into both of the guide grooves formed in the first and second information layers.

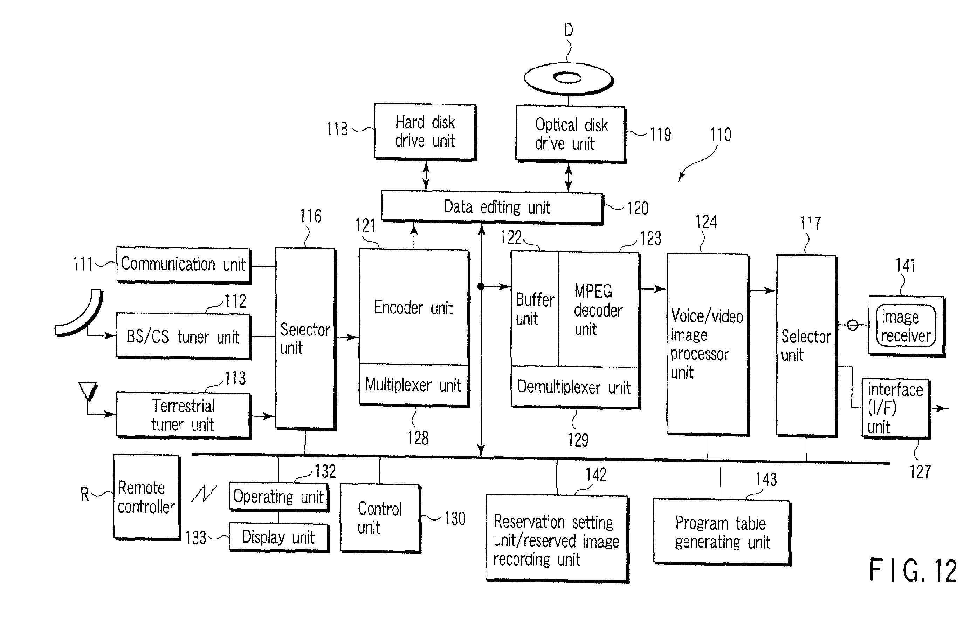

<Fifth embodiment: FIG. 11>

A fifth embodiment specifies that that a guide groove of a first information layer 52 is provided on an adhesive layer 53 and that a guide groove of a second information layer 54 is provided on a substrate 55. Here, a guide groove is not provided in a transparent substrate 51.

That is, the guide groove provided in the first information layer 52 in FIG. 1 is formed in the adhesive layer 53, and the guide groove provided in the second information layer 54 is formed on the substrate 55. Occasionally, the adhesive layer 53 may be formed of a multiple layers that consist of a plurality of materials. In this mode as well, the first to fifth test data described above and the recording/reproducing characteristics of Comparative Examples 1 and 2 are obtained.

In addition, the guide grooves formed in these first and second information layers are capable of carrying out recording into only a guide groove that is closer to the laser beam incidence side. In addition, the guide grooves formed in these first and second information layers are capable of carrying out recording into only a guide groove that is distant from the laser beam incidence side. Similarly, it is preferable to carry out recording into both of the guide grooves formed in the first and second information layers.

<Sixth embodiment: FIG. 12>

A sixth embodiment specifies an example of an optical disk device for carrying out recording/reproducing processing operation of the two-layered optical disk described above. FIG. 12 is a block diagram depicting an example of an optical disk device handling a two-layered optical disk according to an embodiment of the present invention.

In an optical disk device 110, a digital television having a recording function is shown while a tuner or the like is defined as a source. In addition, it is preferable that the optical disk device 110 be a hard disk recorder having tuner, recording functions and the like.

Therefore, in a description of an embodiment with reference to FIG. 12 that follows, while a description will be given in detail with respect to a digital television having a recording function, it is possible to be construed as a description of a hard disk recorder having exactly the same functions by separating a display 126 from FIG. 12.

In FIG. 12, the optical disk device 110 that is a digital television has two types of disk drives. This optical disk device has: a hard disk drive unit 118 for driving a hard disk H as a first medium; and an optical disk drive unit 119 for rotationally driving an optical disk D that is an information recording medium capable of constructing a video file as a second medium and executing read/write operation of information. In addition, a control unit 130 is connected to each unit via a data bus B in order to control a whole operation. However, in the case of carrying out the present invention, the optical disk drive unit 119 is not always a necessary constituent element.

In addition, the optical disk device 110 of FIG. 12 consists essentially of: an encoder unit 121 that configures an image recording side; an MPEG decoder unit 123 that configures a reproduction side; and the control unit 130 that controls an operation of an equipment main body. The optical disk device 110 has an input side selector 116 and an output side selector 117. To the input side selector 116, there are connected: a communication unit 111 such as LAN; a so called satellite broadcast (BS/CS) digital tuber unit 112; a so called terrestrial digital/analog tuner unit 113; and a signal is outputted to the encoder unit 21. In addition, a satellite antenna is connected to the BS/CS digital tuner unit 112; and a terrestrial antenna is connected to the terrestrial digital/analog tuner unit 113. In addition, the optical disk device 110 has: the encoder unit 121; a signal editing unit 120 that receives an output of the encoder unit 121 and carries out desired data processing such as data editing; and the hard disk drive unit 118 and the optical disk drive unit 119 connected to the signal editing unit 120. Further, the optical disk device 110 has: the MPEG decoder unit 123 that receives signals from the hard disk drive unit 118 and the optical disk drive unit 119, and then, decodes the received signal; the encoder unit 121; a buffer unit 122; an MPEG decoder unit 123; a multiplexer unit 128; a demultiplexer unit 129; a control unit 130; a reservation setting unit/reserved image recording unit 142; and a program chart generating unit 143. These units each are connected to the control unit 130 via a data bus B. Further, an output of the selector unit 117 is supplied to the display 126 or is supplied to an external device via an interface unit 127 that makes communication with the external device.

Further, the optical disk device 110 has an operating unit 132 that is connected to the control unit 130 via the data bus B, the operating unit receiving an operation of a user or an operation of a remote controller R. Here, the remote controller R enables an operation that is substantially identical to the operating unit 132 provided at a main body of the optical disk device 110 and enables a variety of settings such as a recording/reproducing instruction and an edit instruction from the hard disk drive unit 118 and the optical disk drive unit 119 or a tuner operation, settings of reserved image recording or the like.

(Basic operation)

- Recording processing operation

Now, an operation at the time of recording will be described in detail including another embodiment. As an input side of the optical disk drive 110, the communication unit 111 such as LAN is connected to an external device to make communication with a program information providing server or the like via a communication channel such as the Internet via a modem or the like, for example, or to download broadcast contents or the like. In addition, the BS/CS digital tuner unit 112 and the terrestrial digital/analog tuner unit 113 select a broadcast signal as a channel via an antenna, demodulates the selected signal, inputs a video image signal and a voice signal, and responds to various types of broadcast signals. For example, the above signals cover a terrestrial analog broadcast, a terrestrial digital broadcast, a BS analog broadcast, a BS digital broadcast, a CS digital broadcast and the like without being limited thereto. In addition, the above case not only includes providing only one element, for example, but includes a case of providing two or three or more terrestrial tuner units and BS/CS tuner units to function in parallel in response to a request for reserved image recording.

In addition, the communication unit 111 described previously, may be an IEEE1394 interface and can receive digital contents from an external device over a network. In addition, it is possible to receive a luminance signal, a color difference signal, a video image signal such as a composite signal, and a voice signal from an input terminal, although not shown. These signals are selectively supplied to the encoder unit 121 while an input is controlled by means of the selector 116 controlled under the control unit 130 or the like.

The encoder unit 121 has a video and audio analog/digital converter, a video encoder, and an audio encoder, the converter digitizing an analog video signal or an analog audio signal inputted by means of the selector 116. Further, this encoder unit also includes a subsidiary video image encoder. An output of the encoder unit 121 is converted into a predetermined MPEG compression format or the like, and then, the converted output is supplied to the control unit 130 described previously.

In addition, there is no need for the BS/CS digital tuner 112 or the like to be always incorporated, and it is also preferable that the tuner is externally provided via a data input terminal to supply a received digital signal to the encoder unit 121 or the control unit 130 via the selector unit 16.

Here, the equipment of FIG. 12 can supply the information encoded by the encoder unit 121 (packs of video, audio, subsidiary video image data or the like) and the produced management information via the control unit 130 to the hard disk drive unit 118 or the optical disk drive unit 119 and can record the supplied items of information in the hard disk drive unit 118 or the optical disk D. In addition, the information recorded in the hard disk drive unit 118 or the optical disk D can be recorded in the optical disk D or the hard disk drive unit 118 via the control unit 130 and the optical disk drive unit 119.

The signal editing unit 120 can carry out edit processing operations such as partially deleting video objects of a plurality of programs recorded in the hard disk drive unit 118 or the optical disk D or connecting objects of different programs.

- Reproducing processing operation or the like

Now, a processing operation of reproducing mainly recorded information will be described in detail including other embodiments.

The MPEG decoder unit 123 is equipped with a video processor for properly combining a decoded subsidiary video image on a decoded main video image, and then, superimposing and outputting a menu, a highlight button, subtitles or other subsidiary video image on the main video image.

An output audio signal of the MPEG decoder unit 123 is analogue-converted by means of a digital/analog converter, although not shown, via the selector unit 117 to be supplied to a speaker, or alternatively, is supplied to an external device via the interface (I/F) unit 127. The selector unit 117 is controlled by means of a select signal from the control unit 130. In this manner, the selector unit 117 is capable of directly selecting a signal having passed through the encoder unit 121 when a digital signal from each of the tuner units 12 and 13 is directly monitored.

The optical disk device 110 according to the present embodiment thus has comprehensive functions, and carries out recording/reproducing processing operation using the optical disk D or the hard disk drive unit 118 with respect to a plurality of sources.

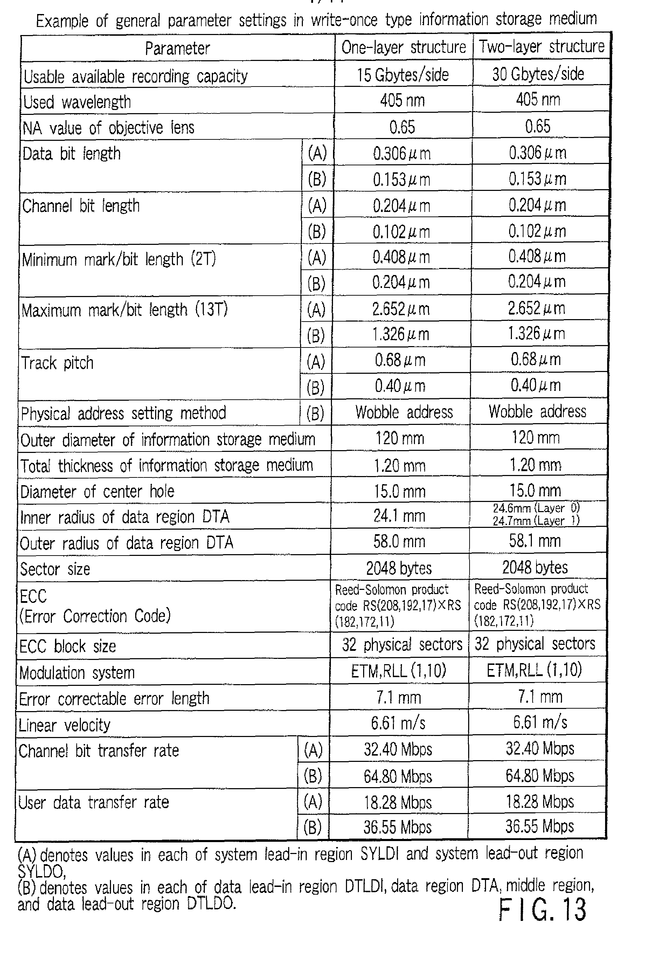

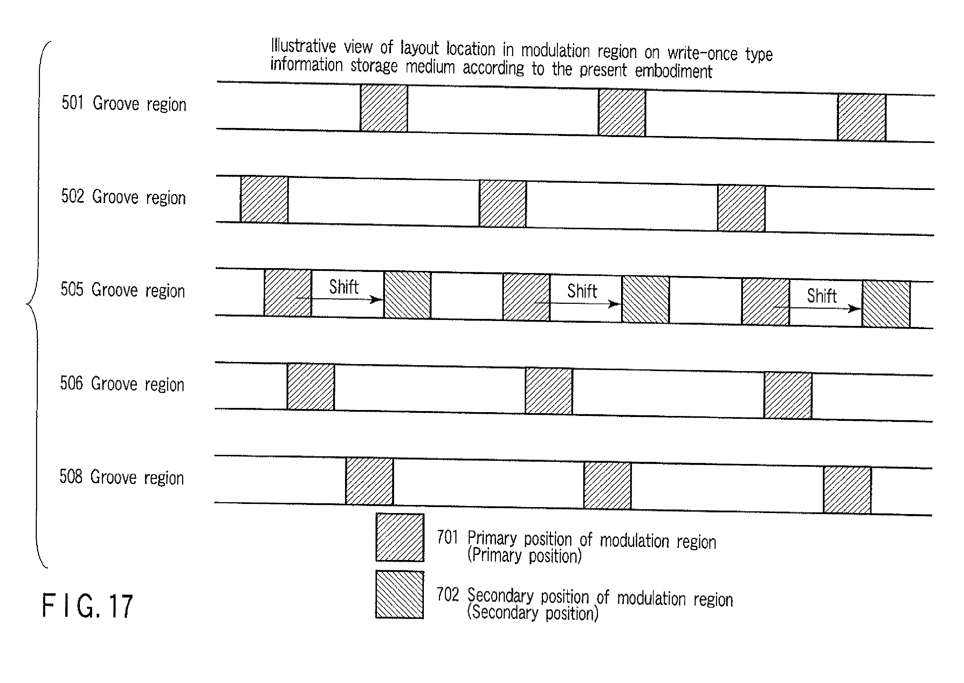

<Seventh embodiment: FIGS. 13 to 24>

A seventh embodiment specifies in detail an example of a standard of a two-layered optical disk that is the above described HD DVD. FIG. 13 is an illustrative view showing a general parameter setting example of a two-layered optical disk according to an embodiment of the present invention.

(Parameters of two-layered disk)

With reference to FIG. 13, a description will be given below with respect to parameters of a two-layered optical disk according to the present invention. With respect to the two-layered optical disk according to the present invention, as shown in FIG. 13, a user usable recording capacity takes a value of 15 Gbytes in a one-layered structure and a value of 30 Gbytes in a two-layered structure.

Similarly, a use wavelength and an NA value of an objective lens are indicated with respect to the one-layered structure and the two-layered structure. In addition, as (A) numeral values in a system lead-in region and a system lead-out region, and further, as (B) numeral values in a data lead-in region, a data region, a middle region, and a data lead-out region, there are shown, with respect to the one-layered structure and the two-layered structure: a data bit length; a channel bit length; a minimum mark/pit length (2T); a maximum mark/pit length (13T); a track pitch; and a value of a physical address setting method.

Further, with respect to the one-layer structure and the two-layered structure, there are shown: an outer diameter of an information storage medium; a total thickness of the information storage medium; a diameter of a center hole; an internal radius of a data region DTA; an outer radius of the data region DTA; a sector size; ECC; an ECC block size; a modulation system; an error correctable error length; and a linear velocity.

Further, with respect to the one-layered structure and the two-layered structure, a channel bit transfer rate and a user data transfer rate are shown as numeral values in (A) the system lead-in region and the system lead-out region, and further, as numeral values in (B) the data lead-in region, the data region, the middle region, and the data lead-out region.

(Wobble structure of two-layered optical disk)

Now, with reference to the accompanying drawings, a description will be given here in detail with respect to HD DVD that is a two-layered optical disk according to the present invention, and in particular, primarily with respect to a wobble structure and features thereof.

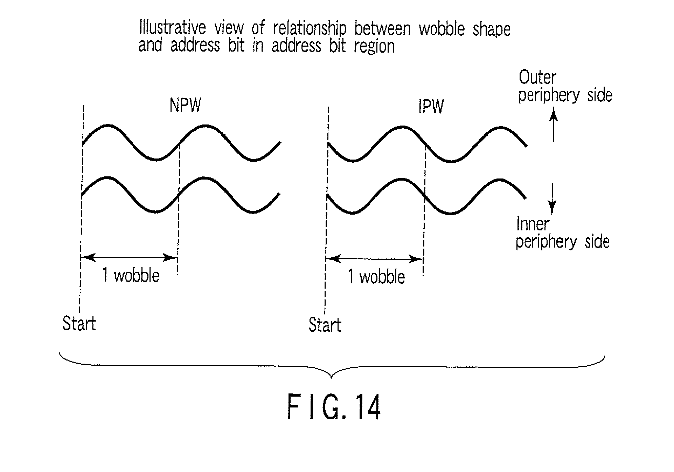

FIG. 14 shows a method for assigning bits in a two-layered optical disk according to the present embodiment. As shown at the left side of FIG. 14, a wobble pattern that wobbles to the outer periphery side first from a start position of one wobble is referred to as a NPW (Normal Phase Wobble), and then, data "0" is assigned. As shown at the right side, a wobble pattern that wobbles to the inner periphery side first from a start position of one wobble is referred to as an IPW (Invert Phase Wobble), and data "1" is assigned.

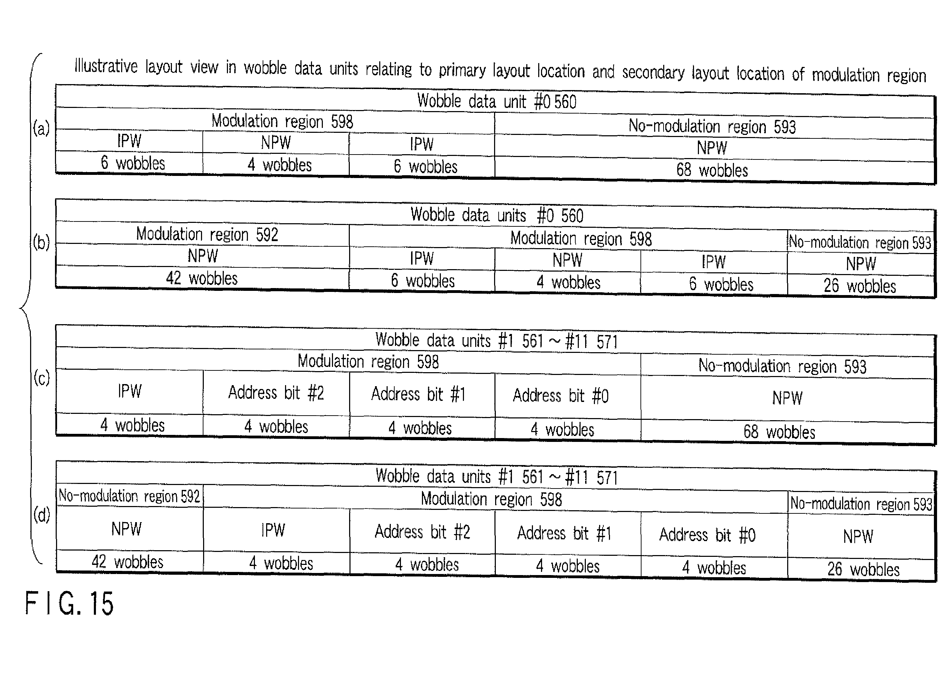

Next, the inside of wobble data units #0560 to #11571 is composed of a modulation region 598 for 16 wobbles and no-modulation regions 592 and 593 for 68 wobbles, as shown in FIG. 15. The present embodiment is primarily featured in that an occupying ratio of the no-modulation regions 592 and 593 with respect to the modulation region is significantly increased. The no-modulation regions 592 and 593 apply a PLL (Phase Locked Loop) utilizing the no-modulation regions 592 and 593 because a groove region and a land region always wobble at a predetermined frequency, making it possible to stably sample (generate) a reference clock to be used when reproducing a recording mark recorded in an information storage medium or a recording reference clock to be used when newly recording the recording mark.

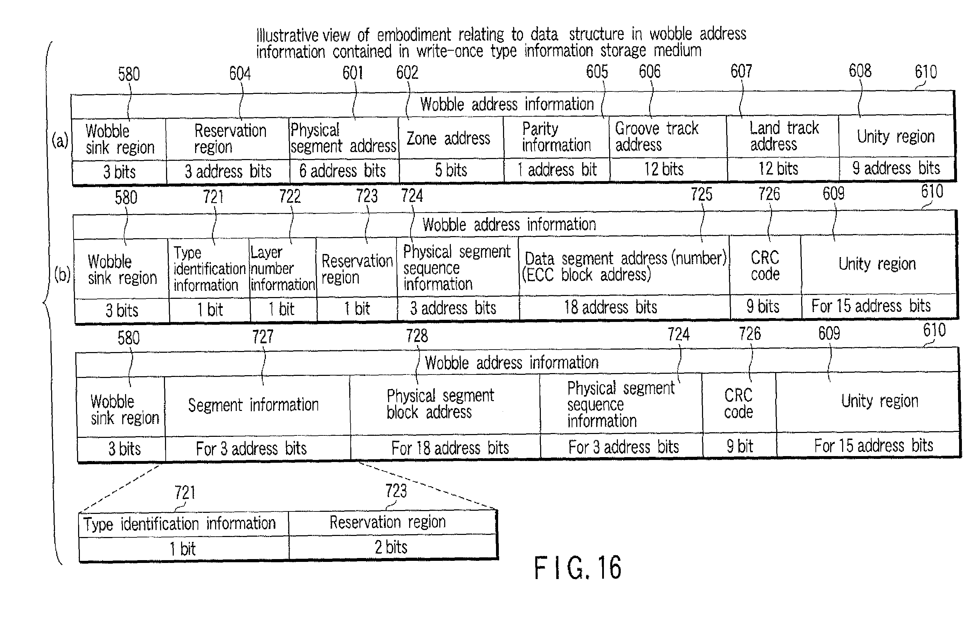

When the control moves from the no-modulation regions 592 and 593 to the modulation region 598, an IPW region serving as a modulation start mark is set by using four wobbles or six wobbles. Then, a wobble data region as shown in (c) and (d) on FIG. 15 is assigned so that there come wobble address regions (address bits #2 to #0) that have been wobble-modulated immediately after detecting the IPW region being this modulation start mark. (a) and (b) on FIG. 15 show the contents of the inside of a wobble data unit #0560 that corresponds to a wobble sink region 580 shown in (c) on FIG. 16 described later. (c) and (d) on FIGS. 15 show the contents of a wobble data unit that corresponds to wobble data portions from segment information 727 to a CRC code 726 of (c) on FIG. 16. (a) and (c) on FIG. 15 show the inside of a wobble data unit that corresponds to a primary position 701 of the modulation region described later. (b) and (c) on FIG. 15 show the inside of a wobble data unit that corresponds to a secondary position 702 of the modulation region. As shown in (a) and (b) on FIG. 15, 6 wobbles are assigned to an IPW region in the wobble sink region 580, and 4 wobbles are assigned to an NPW region surrounded by the IPW region. As shown in (c) and (d) on FIG. 15, a wobble data portion assigns four wobbles to the IPW region and each one of all the address bit regions #2 to #0.

FIG. 16 shows an embodiment relating to a data structure in the wobble address information contained in a write-once type information storage medium. In (a) on FIG. 16, for the sake of comparison, there is shown a data structure in the wobble address information contained in a rewrite type information storage medium. (b) and (c) on FIG. 16 show two embodiments relating to a data structure in the wobble address information contained in the write-once type information storage medium.

In a wobble address region 610, a 3-address bit is set at 12 wobbles. Namely, a 1-address bit is composed of continuous 4 wobbles. As described above, the present embodiment employs a structure in which address information is assigned after dispersed every 3-address bit. If the wobble address information 610 is intensively recorded in one site in the information storage medium, when dust or scratch adheres to a surface, all information becomes difficult to be detected. As described in the present embodiment, there is an advantageous effect that wobble address information 610 is assigned after dispersed every 3-address bit included in one of the wobble data units 560 to 576; information collected every integer-multiple address bit of the 3-address bits is recorded; and, even in the case where it is difficult to detect information contained in one site due to influence of dust or scratch, another item of information can be detected.

As described above, the wobble address information 610 is assigned in a dispersed manner and the wobble address information 610 is completely assigned every 1-physical segment, thus making it possible to identify address information every physical segment. Therefore, when the information recording/reproducing apparatus provides an access, it is possible to know a current position in units of physical segments.

By employing an NRZ technique according to one embodiment, a phase does not change in continuous 4 wobbles in the wobble address region 610. Utilizing this feature, the wobble sink region 580 is set. That is, a wobble pattern that cannot be generated in the wobble address information 610 is set with respect to the wobble sink region 580, thereby making it easy to identify a layout position of the wobble sink region 580. The present embodiment is featured in that a 1-address bit length is set at a length other than 4 wobbles at a position of the wobble sink region 580 with respect to the wobble address regions 586 and 587 that configure 1-address bit with continuous 4 wobbles. That is, in the wobble sink region 580, as shown in (a) on FIG. 15, a region (IPW region) in which a wobble bit is set to "1" is referred to as "6 wobbles → 4 wobbles → 6 wobbles" that are different from 4 wobbles. As shown in (c) and (d) on FIG. 15, a wobble pattern change that cannot occur at the wobble data portion is set. Utilizing a method for changing a wobble cycle as described above, as a specific method for setting a wobble pattern that cannot be generated at the wobble data portion, with respect to the wobble sink region 580, the present embodiment is featured in that:

(1) wobble detection (wobble signal judgment) can be stably continued without distorting a PLL relating to a slot position of a wobble carried out at a wobble signal detecting unit; and

(2) detection of the wobble sink region 580 and modulation start marks 561 and 582 can be carried out more easily due to a shift of an address bit boundary position carried out by the wobble signal detecting unit. In addition, the present embodiment is also featured in that the wobble sink region 580 is formed in a 12-wobble cycle, and a length of the wobble sink region 580 is caused to coincide with a 3-address bit length. In this manner, detection easiness of a start position of the wobble address information 610 (layout position of the wobble sink region 580) is improved by assigning all of the modulation regions (for 16 wobbles) contained in one wobble data unit #0560 to the wobble sink region 580. This wobble sink region 580 is assigned to a first wobble data unit in a physical segment. In this manner, there occurs an advantageous effect that the wobble sink region 580 is assigned at a start position in a physical segment, making it possible to easily sample a boundary position of the physical segment merely by detecting a position of the wobble sink region 580.

As shown in (c) and (d) on FIG. 15, in wobble data units #1561 to #11571, an IPW region serving as a modulation start mark is assigned at a start position as that which precedes address bits #2 to #0. In the no-modulation regions 592 and 593 assigned at the positions that precede them, an NPW waveform is continuously produced, thus detecting a transition from NRW to IPW at the wobble signal detecting unit and sampling a position of the modulation start mark.

For reference, the following contents of the wobble address information 610 in the rewrite type information storage medium shown in (a) on FIG. 16 are recorded.

(1) Physical segment address 601

--- Information indicating a physical segment number contained in a track (one round in the information storage medium 221).

(2) Zone address 602

--- This address indicates a zone number contained in the information storage medium 221.

(3) Parity information 605

--- This information has been set for error detection at the time of reproduction from the wobble address information 610. 14-address bits from reservation information 604 to the zone address 602 are individually added in units of address bits, displaying whether the addition result is an even number or an odd number. A value of the parity information 605 is set so that a result obtained by taking exclusive OR in units of address bits becomes "1" with respect to a total of 15 address bits including 1-address bit of this address parity information 605.

(4) Unity region 608

--- As described previously, the inside of each wobble data unit is set so as to be composed of a modulation region 598 for 16 wobbles and no-modulation regions 592 and 593 for 68 wobbles, and an occupying ratio of the no-modulation regions 592 and 593 with respect to the modulation region 598 is significantly increased. Further, the occupying ratio of the no-modulation regions 592 and 593 is increased, improving the precision and stability of sampling (generating) a reproduction reference clock or a recording reference clock. An NPW region is wholly continuous in the inside of the unity region 608, and becomes a no-modulation region in a uniform phase.

(a) on FIG. 16 shows the number of address bits assigned to each item of the information described above. As described above, the inside of the wobble address information 610 is separated by 3-address bits, respectively, and is dispersed and assigned in each wobble data unit. Even if a burst error occurs due to the dust or scratch on a surface of an information storage medium, there is a very low probability that the error extends across the different wobble data units. Therefore, a contrivance is made so that the count of crossing the different wobble units as locations in which the same items of information are to be recorded is reduced to minimum and so that the transition of each item of information and the boundary position of the wobble data unit are caused to coincide with each other. In this manner, even if a burst error occurs due to the dust or scratch on the surface of the information storage medium, and specific information cannot be read, the reproduction reliability of wobble address information is improved by reading another item of information recorded in any other wobble data unit.

As shown in (b) and (c) on FIG. 16, in the write-once information storage medium as well, as in the rewrite type information storage medium, the wobble sink region 580 is assigned at a start position of a physical segment, facilitating detection of the start position of the physical segment or the boundary position between the adjacent physical segments. Type identification information 721 on the physical segment shown in (b) on FIG. 16 indicates a layout position of a modulation region in the physical segment as in the wobble sink pattern in the wobble sink region 580 described above. In this manner, there is an advantageous effect that the layout location of another modulation region 598 in the same physical segment can be predicted in advance and preparation for detecting next forthcoming modulation region can be made, thus making it possible to improve the signal detection (judgment) precision in the modulation region.
Layer number information 722 in the write-once type information storage medium shown in (b) on FIG. 16 represents which of a one-sided 1 recording layer and a one-sided 2 recording layer is indicated. This information denotes:

- when "0" is set, "L0 layer" (frontal layer at the laser beam incidence side) in the case of a one-sided 1 recording layer medium or a one-sided 2 recording layer;
- when "1" is set, "L1 layer" of a one-sided 2 recording layer (layer on the depth side of the laser beam incidence side).

Physical segment sequence information 724 indicates a layout sequence of relative physical segments in the same physical segment block. As is evident in comparison with (a) on FIG. 16, a start position of the physical segment sequence information 724 in the wobble address information 610 coincides with a start position of the physical segment address 601 in the rewrite type information storage medium. Compatibility between medium types is enhanced by adjusting the physical segment sequence information position to a rewrite type. In addition, simplification can be achieved by means of sharing of an address detection control program using a wobble signal in an information recording/reproducing apparatus that can use both of the rewrite type information storage medium and the write-once type information storage medium.
A data segment address 725 shown in (b) on FIG. 16 describes address information on a data segment in numbers. As described previously, 1 ECC block is composed of 32 sectors in the present embodiment. Therefore, the least significant 5 bits of the physical sector numbers of a sector assigned at a start position in a specific ECC block coincide with sector numbers of a sector assigned to a start position in the adjacent ECC block. In the case where physical sector numbers are set so that the least significant 5 bits of the physical sector numbers of a sector assigned to the start position in the ECC block becomes "00000", the values of the least significant 6th bit or subsequent of the physical sector numbers of all sectors that exist in the same ECC block coincide with each other. Therefore, the least significant 5-bit data of the physical sector numbers of sectors that exist in the same ECC block is eliminated, and then, address information obtained by sampling only the data on the least significant 6th bit and subsequent is defined as an ECC block address (or ECC block address number). A data segment address 725 (or physical segment block number information) recorded in advance by wobble modulation coincides with the ECC block address described above. Thus, if position information on the physical segment block by means of wobble modulation is displayed by a data segment address, there occurs an advantageous effect that an amount of data is reduced on a 5 bit by 5 bit basis, as compared with a case in which the information is displayed by physical sector numbers, simplifying current position detection at the time of access.

In a CRC code 726 shown in (b) and (c) on FIG. 16, even if a wobble modulation signal is partially mistakenly read by a CRC code (error correction code) relevant to 24 address bits from the type identification information 721 to the data segment address 725 of a physical segment or a CRC code relevant to 24 address bits from the segment information 727 to the physical segment sequence information 724, such a mistakenly read signal can be partially modified by means of this CRC code 726.

In the write-once type information storage medium, a region equivalent to the remaining 15 address bits is assigned to a unity region 609, and the inside of 5 wobble data units from 12th to 16th data units is wholly obtained as NPW (modulation region 598 does not exist).

A physical segment block address 728 shown in (c) on FIG. 16 is obtained as an address set for each physical segment block that configures 1 unit with 7 physical segments. A physical segment block address relevant to a first physical segment block in a data lead-in DTRDI is set to "1358h". Including a data region DTA, the values of the physical segment block addresses are added on 1 by 1 basis sequentially from the first physical segment block in a data lead-in DTLDI to the last physical segment block in a data lead-out DTLDO.

The physical segment sequence information 724 represents the sequence of the physical segments in 1 physical segment block, "0" is set with respect to the first physical segment, and "6" is set with respect to the last physical segment.

The embodiment shown in (c) on FIG. 16 is featured in that the physical segment block address 728 is assigned to a position preceding the physical segment sequence information 724. For example, as in an RMD field 1 shown in table 18, address information is often managed by means of this physical segment block address. In the case where an access is provided to a predetermined physical segment block address in accordance with these items of management information, a wobble signal detecting unit first detects a location of the wobble sink region 580 shown in (c) on FIG. 16, and then, information is sequentially decoded from the information recorded immediately after the wobble sink region 580. In the case where a physical segment block address exists at a position that precedes the physical segment sequence information 724, it is possible to first decode the physical segment block address, and judge whether or not it is a predetermined physical segment block address without decoding the physical segment sequence information 724. Thus, there is an advantageous effect of improving accessibility using a wobble address.

The inside of the segment information 727 is composed of type identification information 721 and a reservation region 723.

The present embodiment is featured in that the type identification information 721 is assigned immediately after the wobble sink region 580 in (c) on FIG. 16. As described above, a wobble signal detecting unit, although not shown, first detects a location of the wobble sink region 580 shown in (c) on FIG. 16, and then, sequentially decodes information from the information recorded immediately after the wobble sink region 580. Therefore, a layout location check of a modulation region in a physical segment can be made immediately by assigning the type identification information 721 immediately after the wobble sink region 580, thereby making it possible to achieve high speed access processing using a wobble address.

(Method for measuring wobble detection signal)

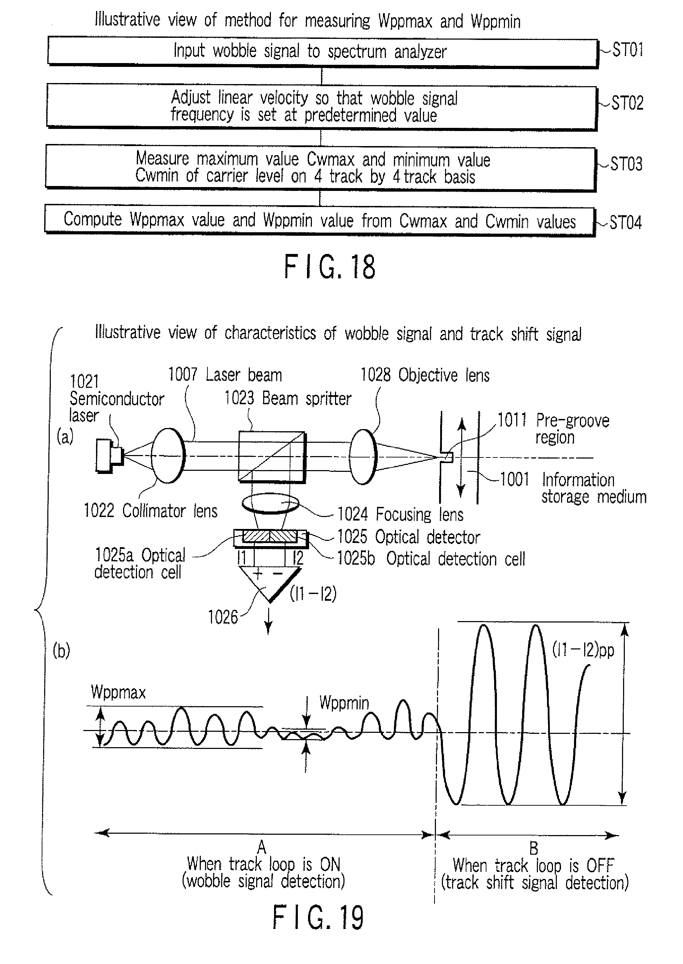

With reference to a flow chart shown in FIG. 18, a description will be given with respect to a method for measuring a maximum amplitude (Wppmax) and a minimum amplitude (Wppmin) of a wobble detection signal in order to specify a reproduction signal quality so as to restrict a cross talk quantity of a wobble signal to be equal to or smaller than a specific quantity. As shown in step ST01, a wobble signal is inputted to a spectrum analyzer. Here, parameters of the spectrum analyzer are set as follows:

| | |
|---|---|
| Center frequency | 697 kHz |
| Frequency span | 0 Hz |
| Resolution band width | 10 kHz |
| Video band width | 30 Hz |

Next, in step ST02, a linear velocity is adjusted by changing a rotation frequency of a disk so that a wobble signal frequency is set at a predetermined value.

In the present embodiment, a predetermined value of a signal frequency of a wobble is set to 697 kHz because an H format is used.

Now, a description will be given with respect to a example of measuring a maximum value (Cwmax) and a minimum value (Cwmin) of a carrier level of a wobble detection signal.

A wobble phase between the adjacent tracks changes depending on a track position because the write-once type storage medium according to the present embodiment uses a CLV (Constant Linear Velocity) recording system. In the case where there has been a coincidence in wobble phase between the adjacent tracks, a carrier level of a wobble detection signal becomes the highest, and then, the maximum value (Cwmax) is obtained. In addition, when the wobble phase between the adjacent tracks is reversed in phase, the wobble detection signal becomes the lowest under the influence of a cross talk of the adjacent tracks, and the minimum value (Cwmin) is obtained. Therefore, in the case where tracing is carried out from the inner periphery to the outer periphery along a track, the magnitude of a carrier of a wobble detection signal to be detected fluctuates at a 4-track cycle.

In the present embodiment, a wobble carrier signal is detected on a 4 by 4 track basis, and then, the maximum value (Cwmax) and the minimum value (Cwmin) on a 4 by 4 track basis is measured. Then, in step S03, a pair of the maximum value (CWmax) and the minimum value (Cwmin) is stored as data of 30 or more pairs.

Next, using the computing formula below, in step ST04, a maximum amplitude (Wppmax) and a minimum amplitude (Wppmin) are computed from an average value of the maximum value (Cwmax) and the minimum value (Cwmin).

In the formula below, R represents a terminated resistance value of a spectrum analyzer. Now, a description will be given with respect to a formula of computing Wppmax and Wppmin from the values of Cwmax and Cwmin.

In a dBm unit system, 0 dBm = 1 mW is defined as a reference. Here, a voltage amplitude Vo when power Wa = 1 mW is obtained is as follows:

$$
\begin{aligned}
Wao &\\
&= IVo \\
&= Vo \times Vo/R \\
&= 1/1000 \ W.
\end{aligned}
$$

Therefore, Vo = $(R/1000)^{1/2}$ is obtained.

Next, a relationship between a wobble amplitude Wpp [V] and a carrier level Cw [dBm] monitored by the spectrum analyzer is obtained as follows. Here, Wpp is a sine wave, and thus, when the amplitude is represented as an effective value, it follows:

$$
Wpp - rms = Wpp/(2 \times 2^{1/2})
$$

Cw = 20 $\times$ log (Wpp - rms/Vo) [dBm] is obtained.

Therefore, it follows:

$$
Cw = 10 \times log \ (Wpp - rms/Vo)^2
$$

When log in the above formula is converted, it follows:

$$
\begin{aligned}
&(Wpp - rms/Vo)^2 \\
&= 10^{(Cw/10)} \\
&= \{[Wpp/(2 \times 2^{1/2})]/Vo\}^2 \\
&= (Wpp/(2 \times 2^2)/(R/1000)^{1/2})^2 \\
&= (Wpp^2/8)/(R/1000)
\end{aligned}
$$

$$WPP2^2$$
$$= (8 \times R)/(1000 \times 10^{(Cw/10)})$$
$$= 8 \times R \times 10^{(-3)} \times 10^{(Cw/10)}$$
$$= 8 \times R \times 10^{(Cw/10)(-3)}$$

$$Wpp = \{8 \times R \times 10^{(Cw/10)(-3)}\}^{1/2} \qquad\qquad (61)$$

Now, FIG. 19 shows characteristics of a wobble signal and a track shift detection signal.

Next, a (I1- I2) signal that is a track shift detection signal detected by an optical head shown in (a) on FIG. 19 is inputted to a wobble signal detecting unit, although not shown.

A description will be given with respect to an internal structure of an optical head that exists in an information recording/reproducing unit. As shown in (a) on FIG. 19, laser beams emitted from a semiconductor laser 1021 are obtained as parallel beams by means of a collimator lens 1022. The parallel beams are focused on an objective lens 1028 via a beam splitter 1023. Then, the focused beams are irradiated into a pre-groove region 1011 of an information storage medium 1001. The pre-groove region 1011 carries out very small wobbling. The light beams reflected from the wobbled pre-groove region 1011 pass through the objective lens 1028; the passed light beams are reflected by means of the beam splitter 1023; and the reflected beams are irradiated to an optical detector 1025 by means of a focusing lens 1024.

The optical detector 1025 is composed of an optical detection cell 1025-1 and an optical detection cell 1025-2. A difference between signals 11 and 12 detected from the respective detection cells 1025-1 and 1025-2 can be obtained, and then, these signals are inputted to a wobble signal detecting unit, although not shown. As shown in (a) on FIG. 19, an optical head can detect any of a wobble signal and a track shift detection signal of a push-pull system.

When a track loop is turned ON, a bandwidth of a wobble frequency is higher than a tracking bandwidth, and thus, a wobble signal is detected from an optical head. Here, when wobble phases of pre-grooves between the adjacent tracks are equal to each other, the maximum amplitude of Wppmax is obtained. When the wobble phase is reversed, a wobble signal amplitude is lowered under the influence of a cross talk of the adjacent tracks, and the minimum amplitude is obtained as Wppmin.

In the present embodiment, a contrivance is made so as to specify a condition between the maximum amplitude (Wppmax) and the minimum amplitude (Wppmin), and enable more stable wobble detection. That is, the wobble signal detecting unit is designed so that, even if the amplitude value of the wobble detection signal changes up to a maximum of 3 times, a signal can be stably detected. In addition, it is desirable that a change rate of an amplitude of a wobble detection signal be equal to or smaller than 1/2 under the influence of a cross talk.

Therefore, in the present embodiment, an intermediate value thereof is taken, and a value obtained by dividing an allowed maximum value of a wobble signal by a minimum value of the wobble signal (Wppmax÷Wppmin) is set to be 2.3 or less.

In the present embodiment, the value of (Wppmax÷Wppmin) is set to be 2.3 or less, whereas it is possible to stably detect a signal even if the value of (Wppmax÷Wppmin) is 3 or more in view of the performance of the wobble signal detecting unit. In addition, in the case of carrying out wobble detection with high precision, the value of (Wppmax÷Wppmin) can be 2.0 or less. The wobble amplitude of the pre-groove region 1011 is set so as to meet the conditions described above.

In the case where a track loop is turned OFF as shown in (b) on FIG. 19, a track shift detection signal appears from an optical head. At this time, the maximum amplitude of the track shift detection signal is represented by (I1 - I2) pp. This value of (I1 - I2) pp is obtained by obtaining a difference between the signal I1 detected from the optical detection cell 1025-1 and the signal I2 detected from the optical detection cell 1025-2. The thus obtained signal is signal-processed after passing through a low-pass filter with a shutdown frequency (cutoff frequency) of 30 kHz. This low-pass filter is composed of a primary filter. In addition, this value of (I1 - 12) pp is measured by an unrecorded data region (DTA) and a data lead-in region (DTLDI) or a data lead-out region (DTLDO) in an unrecorded region.

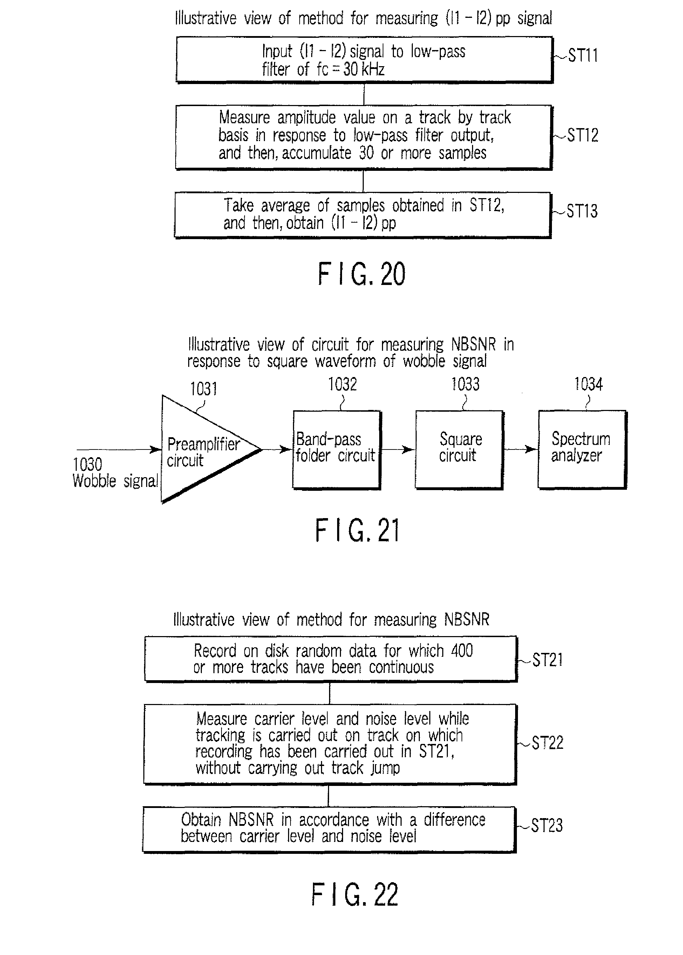

Now, with reference to FIG. 20, a description will be given with respect to a method for measuring an amplitude value (I1 - I2) pp of a track shift detection signal.

In step ST11, a signal of (I1 - I2) obtained from an optical head shown in FIG. 19A is inputted to a low-pass filter of a shutdown frequency (cutoff frequency) fc = 30 kHz.

In step ST12, an amplitude value is measured on a track by track basis in response to a low-pass filter output, and 30 or more samples are accumulated.

In step ST13, (I1 - I2) pp is obtained by taking an average of the samples obtained in step ST12.

A wobble signal detecting unit, although not shown, detects a wobble signal and detects a track shift detection signal by using the same detector circuit. The wobble signal detecting unit, although not shown, detects the wobble signal and the track shift detection signal, thereby making it possible to process (share) two works by one detector circuit, and thus, making it possible to promote circuit simplification.

(Method for measuring NBSNR)

Now, with reference to a flow chart shown in FIG. 22, a description will be given with respect to a specific method for measuring NBSNR. First, random data for which 400 or more tracks are continuous is recorded on an information storage medium (step ST21). Next, while tracking is carried out on a track recorded in step ST21 without making a track jump, a carrier level and a noise level are measured (step ST22). NBSNR is obtained in accordance with a difference between the carrier level and the noise level measured in accordance with step ST22.

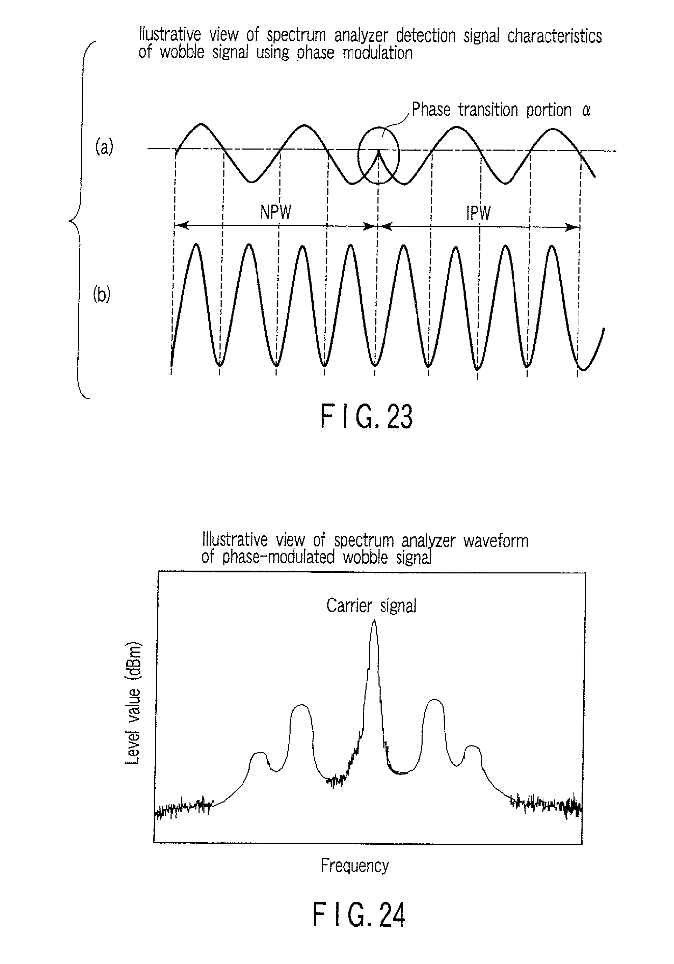

Now, a description will be given with respect to a reason why a square circuit (1033 in FIG. 21) has been used to measure a C/N ratio of a wobble detection signal. As shown in FIG. 23, in an H format embodiment, a wobble detection signal is provided by means of phase modulation. In the case of phase modulation, as shown in (a) on FIG. 23, a number of frequency components are provided at a transition portion $\alpha$ of a transition portion (between NPW and IPW) of a phase.

Thus, when a wavelength of a wobble detection signal shown in (a) on FIG. 23 is analyzed by means of a spectrum analyzer 1034, a large peak appears at the periphery of a carrier, as shown in FIG. 24. Therefore, it becomes difficult to specify the noise level.

On the contrary, as shown in (b) on FIG. 23, when a square of a wobble detection signal modulated by means of phase modulation is taken, the squared waveforms between the IPW region and the NPW region become the same. Thus, a portion such as a phase transition does not appear, a very stable signal is obtained, and a rise portion of the periphery of the carrier signal shown in FIG. 24 is eliminated. As a result, a signal at a carrier level of a single peak is obtained.

One skilled in the art can achieve the present invention in accordance with a variety of embodiments described above. Further, it would be obvious to one skilled in the art to conceive a variety of modified examples of these embodiments. The present invention can be applied to a variety of embodiments even if one does not have any inventive capability. Therefore, the present invention covers a broad range without departing from the disclosed principle and novel features, and is not limited to the embodiments described above.

**Claims**

1.  An optical disk **characterized by** comprising:

    a substrate layer (11) having a refractive index of 1.50 to 1.70 and a thickness X ($\mu$m) equal to or greater than f (n) - 13 $\mu$m;
    a first information layer (12) formed on the substrate layer;
    an adhesive layer (13) formed on the first information layer and having a thickness Y ($\mu$m) equal to or greater than 20 $\mu$m; and
    a second information layer (14) formed on the adhesive layer,

    wherein X + Y $\leq$ f (n) + 30 $\mu$m and f (n) < X + Y/2 are satisfied and f (n) is given by the formula:
    f (n) = $(A_1 \times n^3)$ $(n^2 + A_2)/(n^2 - 1)$ $(n^2 + A_3)$ $\times$ 1000 ($\mu$m), where "n" is a refractive index of the substrate layer; $A_1$ is 0.26200; $A_2$ is -0.32400; and A3 is 0.00595.

2.  The optical disk according to claim 1, **characterized in that** a reflection index relevant to a wavelength of a laser beam for use in recording/reproduction is in the range of 3% to 10% in the first information layer and the second information layer.

3.  The optical disk according to claim 1, **characterized in that** a reflection index from the second information layer is in the range of 0.8 time to 1.2 times with respect to a reflection index from the first information layer.

4.  The optical disk according to claim 1, **characterized in that** the first information layer and the second information layer each have a guide groove depth of 25 nm to 100 nm.

5.  The optical disk according to claim 1, **characterized in that** the first information layer and the second information layer each have a guide groove width equal to or smaller than 0.4 $\mu$m.

6. The optical disk according to claim 1, **characterized in that** at least one of the first and second information layers is a layer that reversibly carries out recording/erasing using light, and said one information layer includes a substrate, a recording film capable of reversibly changing an atomic sequence, a protective film, and a reflection film.

7. The optical disk according to claim 1, **characterized in that** at least one of the first and second information layers is a layer that reversibly carries out recording/erasing using light, and said one information layer includes a substrate, a recording film capable of reversibly changing an atomic sequence, a film having a crystallization promoting function and coming into contact with the recording film, a protective film, and a reflection film.

8. The optical disk according to claim 1, **characterized in that** at least one of the first and second information layers is a layer that reversibly carries out recording/erasing using light and includes an organic pigment material having light absorption in a range of laser beam to be used.

9. The optical disk according to claim 1, **characterized in that**, among guide grooves formed in the first and second information layers, recording is carried out for only guide grooves close to a laser light incident side.

10. The optical disk according to claim 1, **characterized in that**, among guide grooves formed in the first and second information layers, recording is carried out for only guide grooves distant from a laser light incident side.

11. The optical disk according to claim 1, **characterized in that**, among guide grooves formed in the first and second information layers, recording is carried out for the both grooves.

12. The optical disk according to claim 1, **characterized in that** information recording and reproducing processing operations are carried out with respect to the optical disk according to claim 1.

F I G. 1

F I G. 2

C2

Measure
value
status

P1:matlab(C2,C2) P2:matlab(C1,C2) P3:matlab(F1,C2) P4:matlab(C2,N···) P5:matlab(C2,C2) P6:matlab(C1,C2)     P7:··· P8:matlab(C1,C2)

| C2 (BwL)(DC50) | | Timebase -47.7ms | Trigger (C3) |
| 24.5mV/div | | 5.00ms/div | Normal 63mV |
| -165.0mV ofst | | 5.00Ms 100MS/s | Edge Negative |

583 μm

(a)

C2

Measure
value
status

P1:matlab(C2,C2) P2:matlab(C1,C2) P3:matlab(F1,C2) P4:matlab(C2,N···) P5:matlab(C2,C2) P6:matlab(C1,C2) P7:··· P8:matlab(C1,C2)

| C2 (BwL)(DC50) | | Timebase -270.9ms | Trigger (C3) |
| 25.5mV/div | | 5.00ms/div | Normal 63mV |
| -162.5mV ofst | | 5.00Ms 100MS/s | Edge Negative |

587 μm

(b)

F I G. 3

F I G. 4

F I G. 5

F I G. 6

F I G. 7

D
25
24
23
22
21

Laser beam

FIG. 8

D
35
34
33
32
31

Laser beam

FIG. 9

D
45
44
43
42
41

Laser beam

FIG. 10

D
55
54
53
52
51

Laser beam

FIG. 11

D

118 — Hard disk drive unit

Optical disk drive unit — 119

110

Data editing unit — 120

116

121

122

123

124

117

141

111 — Communication unit

Selector unit

Encoder unit

Buffer unit

MPEG decoder unit

Voice/video image processor unit

Selector unit

Image receiver

112

BS/CS tuner unit

Multiplexer unit

Demultiplexer unit

128

129

Interface (I/F) unit

113

Terrestrial tuner unit

127

R — Remote controller

132 — Operating unit

Control unit — 130

142 — Reservation setting unit/reserved image recording unit

143 — Program table generating unit

133 — Display unit

F I G. 12

Example of general parameter settings in write-once type information storage medium

| Parameter | | One-layer structure | Two-layer structure |
|---|---|---|---|
| Usable available recording capacity | | 15 Gbytes/side | 30 Gbytes/side |
| Used wavelength | | 405 nm | 405 nm |
| NA value of objective lens | | 0.65 | 0.65 |
| Data bit length | (A) | 0.306 $\mu$m | 0.306 $\mu$m |
| | (B) | 0.153 $\mu$m | 0.153 $\mu$m |
| Channel bit length | (A) | 0.204 $\mu$m | 0.204 $\mu$m |
| | (B) | 0.102 $\mu$m | 0.102 $\mu$m |
| Minimum mark/bit length (2T) | (A) | 0.408 $\mu$m | 0.408 $\mu$m |
| | (B) | 0.204 $\mu$m | 0.204 $\mu$m |
| Maximum mark/bit length (13T) | (A) | 2.652 $\mu$m | 2.652 $\mu$m |
| | (B) | 1.326 $\mu$m | 1.326 $\mu$m |
| Track pitch | (A) | 0.68 $\mu$m | 0.68 $\mu$m |
| | (B) | 0.40 $\mu$m | 0.40 $\mu$m |
| Physical address setting method | (B) | Wobble address | Wobble address |
| Outer diameter of information storage medium | | 120 mm | 120 mm |
| Total thickness of information storage medium | | 1.20 mm | 1.20 mm |
| Diameter of center hole | | 15.0 mm | 15.0 mm |
| Inner radius of data region DTA | | 24.1 mm | 24.6mm (Layer 0) 24.7mm (Layer 1) |
| Outer radius of data region DTA | | 58.0 mm | 58.1 mm |
| Sector size | | 2048 bytes | 2048 bytes |
| ECC (Error Correction Code) | | Reed-Solomon product code RS(208,192,17)×RS (182,172,11) | Reed-Solomon product code RS(208,192,17)×RS (182,172,11) |
| ECC block size | | 32 physical sectors | 32 physical sectors |
| Modulation system | | ETM,RLL (1,10) | ETM,RLL (1,10) |
| Error correctable error length | | 7.1 mm | 7.1 mm |
| Linear velocity | | 6.61 m/s | 6.61 m/s |
| Channel bit transfer rate | (A) | 32.40 Mbps | 32.40 Mbps |
| | (B) | 64.80 Mbps | 64.80 Mbps |
| User data transfer rate | (A) | 18.28 Mbps | 18.28 Mbps |
| | (B) | 36.55 Mbps | 36.55 Mbps |

(A) denotes values in each of system lead-in region SYLDI and system lead-out region SYLDO,
(B) denotes values in each of data lead-in region DTLDI, data region DTA, middle region, and data lead-out region DTLDO.

F I G. 13

Illustrative view of relationship between wobble shape
and address bit in address bit region

Outer
periphery side
↑

NPW                    IPW

↓
Inner
periphery side

|← 1 wobble →|        |← 1 wobble →|

Start                  Start

F I G. 14

Illustrative layout view in wobble data units relating to primary layout location and secondary layout location of modulation region

(a)

| Wobble data unit #0 560 | | | |
|---|---|---|---|
| Modulation region 598 | | | No-modulation region 593 |
| IPW | NPW | IPW | NPW |
| 6 wobbles | 4 wobbles | 6 wobbles | 68 wobbles |

(b)

| Wobble data units #0 560 | | | | |
|---|---|---|---|---|
| Modulation region 592 | Modulation region 598 | | | No-modulation region 593 |
| NPW | IPW | NPW | IPW | NPW |
| 42 wobbles | 6 wobbles | 4 wobbles | 6 wobbles | 26 wobbles |

(c)

| Wobble data units #1 561 ～ #11 571 | | | | |
|---|---|---|---|---|
| Modulation region 598 | | | | No-modulation region 593 |
| IPW | Address bit #2 | Address bit #1 | Address bit #0 | NPW |
| 4 wobbles | 4 wobbles | 4 wobbles | 4 wobbles | 68 wobbles |

(d)

| Wobble data units #1 561 ～ #11 571 | | | | | |
|---|---|---|---|---|---|
| No-modulation region 592 | Modulation region 598 | | | | No-modulation region 593 |
| NPW | IPW | Address bit #2 | Address bit #1 | Address bit #0 | NPW |
| 42 wobbles | 4 wobbles | 4 wobbles | 4 wobbles | 4 wobbles | 26 wobbles |

F I G. 15

EP 1 835 498 A2

Illustrative view of embodiment relating to data structure in wobble address
information contained in write-once type information storage medium

(a)

| Wobble sink region | Reservation region | Physical segment address | Zone address | Parity information | Groove track address | Land track address | Unity region |
|---|---|---|---|---|---|---|---|
| 3 bits | 3 address bits | 6 address bits | 5 bits | 1 address bit | 12 bits | 12 bits | 9 address bits |

Wobble address information: 580 604 601 602 605 606 607 608 610

(b)

| Wobble sink region | Type identification information | Layer number information | Reservation region | Physical segment sequence information | Data segment address (number) (ECC block address) | CRC code | Unity region |
|---|---|---|---|---|---|---|---|
| 3 bits | 1 bit | 1 bit | 1 bit | 3 address bits | 18 address bits | 9 bits | For 15 address bits |

Wobble address information: 580 721 722 723 724 725 726 609 610

| Wobble sink region | Segment information | Physical segment block address | Physical segment sequence information | CRC code | Unity region |
|---|---|---|---|---|---|
| 3 bits | For 3 address bits | For 18 address bits | For 3 address bits | 9 bit | For 15 address bits |

Wobble address information: 580 727 728 724 726 609 610

| Type identification information | Reservation region |
|---|---|
| 1 bit | 2 bits |

721 723

FIG. 16

EP 1 835 498 A2

Illustrative view of layout location in modulation region on write-once type
information storage medium according to the present embodiment

501 Groove region

502 Groove region

505 Groove region

Shift          Shift          Shift

506 Groove region

508 Groove region

701 Primary position of modulation region
(Primary position)

702 Secondary position of modulation region
(Secondary position)

FIG. 17

EP 1 835 498 A2

Illustrative view of method for measuring Wppmax and Wppmin

| Input wobble signal to spectrum analyzer | ~ST01 |

| Adjust linear velocity so that wobble signal frequency is set at predetermined value | ~ST02 |

| Measure maximum value Cwmax and minimum value Cwmin of carrier level on 4 track by 4 track basis | ~ST03 |

| Compute Wppmax value and Wppmin value from Cwmax and Cwmin values | ~ST04 |

## F I G. 18

Illustrative view of characteristics of wobble signal and track shift signal

(a)

1021 Semiconductor laser
1007 Laser beam
1023 Beam spritter
1028 Objective lens
1011 Pre-groove region
1001 Information storage medium
1022 Collimator lens
1024 Focusing lens
1025 Optical detector
1025a Optical detection cell
1025b Optical detection cell
$I_1$  $I_2$
$+$  $-$
$(I_1 - I_2)$
1026

(b)

$(I_1 - I_2)$pp

Wppmax
Wppmin

A
When track loop is ON
(wobble signal detection)

B
When track loop is OFF
(track shift signal detection)

## F I G. 19

Illustrative view of method for measuring (I1 - I2) pp signal

| | |
|---|---|
| Input (I1 - I2) signal to low-pass filter of fc = 30 kHz | ~ST11 |
| Measure amplitude value on a track by track basis in response to low-pass filter output, and then, accumulate 30 or more samples | ~ST12 |
| Take average of samples obtained in ST12, and then, obtain (I1 - I2) pp | ~ST13 |

## F I G. 20

Illustrative view of circuit for measuring NBSNR in response to square waveform of wobble signal

1031          1032          1033          1034

1030
Wobble signal → Preamplifier circuit → Band-pass folder circuit → Square circuit → Spectrum analyzer

## F I G. 21

Illustrative view of method for measuring NBSNR

| | |
|---|---|
| Record on disk random data for which 400 or more tracks have been continuous | ~ST21 |
| Measure carrier level and noise level while tracking is carried out on track on which recording has been carried out in ST21, without carrying out track jump | ~ST22 |
| Obtain NBSNR in accordance with a difference between carrier level and noise level | ~ST23 |

## F I G. 22

Illustrative view of spectrum analyzer detection signal characteristics
of wobble signal using phase modulation

Phase transition portion α

(a)

NPW        IPW

(b)

F I G. 23

Illustrative view of spectrum analyzer waveform
of phase-modulated wobble signal

Carrier signal

Level value (dBm)

Frequency

F I G. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004071046 A

**Non-patent literature cited in the description**

- **Y, NAGAI.** *Jpn. J. Appl. Phys.,* 2003, vol. 42, 971